# EUROPÄISCHE PATENTSCHRIFT

(11) **EP 2 713 821 B1**
(45) Veröffentlichungstag und Bekanntmachung des Hinweises auf die Patenterteilung: **05.10.2016**
(21) Anmeldenummer: 12772699.0
(22) Anmeldetag: 22.05.2012
(51) Int. Cl.: A47B 88/00

(54) **BEFESTIGUNGSVORRICHTUNG ZUM BEFESTIGEN EINER FRONTBLENDE AN EINER SCHUBLADE**
FASTENING DEVICE FOR FASTENING A FRONT PANEL ON A DRAWER
DISPOSITIF DE FIXATION SERVANT À FIXER UN PANNEAU DE FAÇADE SUR UN TIROIR

(30) Priorität: 24.05.2011 AT 7512011
(43) Veröffentlichungstag der Anmeldung: 09.04.2014
(73) Patentinhaber: Julius Blum GmbH, 6973 Höchst (AT)
(72) Erfinder: HOLZAPFEL, Andreas, A-6900 Bregenz (AT); HOFFMANN, Benjamin, A-6850 Dornbirn (AT)
(74) Vertreter: Torggler & Hofinger Patentanwälte
(86) Internationale Anmeldenummer: PCT/AT2012/000141
(87) Internationale Veröffentlichungsnummer: WO 2012/171047

(56) Entgegenhaltungen:
- EP-A2- 2 238 864
- WO-A1-2010/136228
- DE-U1- 29 809 494

## Beschreibung

Die Erfindung betrifft eine Befestigungsvorrichtung zum lösbaren Befestigen einer Frontblende an einer Schublade, insbesondere an einer Schubladenseitenwand, mit:
- wenigstens einem an der Frontblende vormontierten Möbelbeschlag mit einem ersten und einem zweiten Verbindungselement für die Befestigung der Frontblende an der Schublade,
- wenigstens zwei der Schublade zugeordneten Fangvorrichtungen, wobei die Fangvorrichtungen beim Einschieben der Verbindungselemente diese selbsttätig halten, wobei die eine Fangvorrichtung wenigstens ein bewegliches Fangelement und die zweite Fangvorrichtung wenigstens ein bewegliches Halteelement aufweisen,
- wenigstens einer Verriegelungsvorrichtung für die beiden Fangvorrichtungen, die ein unbeabsichtigtes Lösen des Möbelbeschlags aus den Fangvorrichtungen verhindern,
- wenigstens einer Entriegelungsvorrichtung für die beiden Fangvorrichtungen, wobei die Entriegelungsvorrichtung ein gemeinsames Lösen der beiden Verbindungselemente des Möbelbeschlags aus den Fangvorrichtungen ermöglicht,
wobei das Haltelement zum Verriegeln des zweiten Verbindungselements in der zweiten Fangvorrichtung unabhängig vom Fangelement der ersten Fangvorrichtung bewegbar ist.

Weiters betrifft die Erfindung eine Schublade mit wenigstens einer solchen Befestigungsvorrichtung zum lösbaren Befestigen einer Frontblende an der Schublade. Weiters betrifft die Erfindung auch ein Möbel mit einer solchen Schublade.

Befestigungsvorrichtungen zum lösbaren Befestigen der Frontblende an der Schublade sind aus dem Stand der Technik heraus bereits bekannt. Ein Ziel dabei ist meistens u. a. eine rasche Montage der Frontblende an der Schublade zu erreichen, um sowohl die Montagezeiten als auch die Montagekosten gering zu halten.

Die DE 20 2009 014 811 U1 vom 25. März 2010 offenbart einen Möbelbeschlag zum lösbaren Verbinden eines ersten Möbelteils mit einem zweiten Möbelteil, mit einem Aufnahmeelement und wenigstens zwei Befestigungselementen, wobei das Aufnahmeelement dem ersten Möbelteil und die wenigstens zwei Befestigungselemente dem zweiten Möbelteil zugeordnet sind, oder umgekehrt, und wobei das Aufnahmeelement eine Arretiervorrichtung zum lösbaren Halten der wenigstens zwei Befestigungselemente aufweist, wobei die wenigstens zwei Befestigungselemente gemeinsam im Aufnahmeelement arretierbar sind, wobei die Arretiervorrichtung des Aufnahmeelementes wenigstens zwei durch einen Kraftspeicher, vorzugsweise eine Feder, beaufschlagte oder beaufschlagbare Arretierelemente aufweist, die mit den Befestigungselementen verrastbar sind.

Weiter ist aus der WO 2010/136228 A1 eine Vorrichtung zur Befestigung einer Frontblende an einer Seitenzarge bekannt.

Aufgabe der Erfindung ist es, eine gegenüber dem Stand der Technik verbesserte Befestigungsvorrichtung zum lösbaren Befestigen einer Frontblende an der Schublade anzugeben.

Diese Aufgabe wird durch eine Befestigungsvorrichtung mit den Merkmalen des Anspruchs 1 gelöst.

Es ist vorgesehen, dass das Fangelement um eine Drehachse verschwenkbar gelagert ist und dass das Halteelement um eine Drehachse verschwenkbar gelagert ist. Dadurch, dass das Fangelement und das Halteelement um eine Drehachse verschwenkbar gelagert sein können, können diese während des Einschiebens der Verbindungselemente verschwenkt werden.

Da das Haltelement zum Verriegeln des zweiten Verbindungselements in der zweiten Fangvorrichtung unabhängig vom Fangelement der ersten Fangvorrichtung bewegbar ist, wird erreicht, dass diese beiden Elemente nicht gleichzeitig verriegelt werden müssen. Das heißt, dass etwa das Fangelement bereits arretiert sein kann, hingegen das Halteelement noch nicht.

Der Effekt daraus ist, dass der Bediener, der die Frontblende an der Schublade montiert, nicht dazu gezwungen ist, die beiden Verbindungselemente des Möbelbeschlags synchron in die Schubladenseitenwand einzubringen - wie dies der Fall wäre, wenn die Arretiervorrichtung gleichzeitig für beide Fangvorrichtungen auslösen würde.

Dadurch, dass die beiden Verbindungselemente auch eines nach dem anderen in die Befestigungseinrichtung eingebracht werden können, kann eine komfortablere Montage durch den Bediener erfolgen, da sich dieser nicht darauf konzentrieren muss, die beiden Verbindungselemente gleichzeitig in die Befestigungseinrichtung einzubringen.

Dadurch, dass sowohl das Halteelement als auch das Fangelement unabhängig voneinander bewegbar sind, kann sowohl zuerst das Fangelement und anschließend das Halteelement bewegt werden oder auch umgekehrt. Das bewirkt weiters, dass keine Reihenfolge zwingend vorgegeben ist, wann welches Verbindungselement des Möbelbeschlags in die Befestigungsvorrichtung eingebracht werden muss.

Durch die Ausbildung eines Übertragungsmechanismus, der ein gemeinsames Entriegeln der beiden Fangvorrichtungen bewirkt, kann ein besonders komfortables Entriegeln stattfinden, da die beiden Verbindungselemente nicht einzeln aus den beiden Fangvorrichtungen gelöst werden müssen, sondern dies - durch den Übertragungsmechanismus - mit einem einzelnen Löseschritt erfolgen kann.

Weitere vorteilhafte Ausführungsformen der Erfindung sind in den abhängigen Ansprüchen definiert.

Als besonders vorteilhaft hat es sich herausgestellt, wenn die erste Fangvorrichtung in einem unteren Bereich der Befestigungsvorrichtung ausgebildet ist und dass die zweite Fangvorrichtung in einem oberen Bereich der Befestigungsvorrichtung ausgebildet ist. Durch eine übereinander liegende Anordnung der Fangvorrichtungen können diese zum Beispiel gut in oder an einer Schubladenseitenwand befestigt werden.

Weiters kann bevorzugt vorgesehen sein, dass das Fangelement und das Halteelement unabhängig voneinander jeweils von einer Feder beaufschlagt sind. Durch ein federbeaufschlagtes Fangelement und Halteelement können diese - nachdem sie verschwenkt worden sind - wieder selbsttätig in ihre Ausgangsposition zurückkehren bzw. müsste erst die Federkraft überwunden werden, um die beiden Elemente wieder aus einer Arretierstellung lösen zu können.

Besonders bevorzugt kann vorgesehen sein, dass der Übertragungsmechanismus ein Hebelwerk mit einem Schubelement und einem mit dem Schubelement beweglich gekoppelten Übertragungshebel aufweist. Durch die Ausbildung eines Hebelwerks mit Schubelement und Übertragungshebel bei dem Übertragungsmechanismus kann eine stabile und somit langlebige Konstruktion für einen Übertragungsmechanismus erzielt werden.

Als besonders vorteilhaft hat es sich dabei herausgestellt, wenn der Übertragungshebel des Hebelwerks eine Bahn aufweist, an der ein Koppelelement des Halteelements beweglich geführt anliegt. Über eine Bahn des Übertragungshebels kann ein beweglicher Kontakt zum Halteelement bzw. dessen Koppelelement erzielt werden. Dies bewirkt, dass sich das Halteelement relativ zum Übertragungshebel bewegen kann.

Gemäß einem bevorzugten Ausführungsbeispiel kann vorgesehen sein, dass die Bahn als Führungsnut - vorzugsweise als Langloch - ausgebildet ist. Durch die Ausbildung der Bahn als Führungsnut bzw. als Langloch kann gewährleistet werden, dass sich das Koppelelement des Halteelements zwar relativ zum Übertragungshebel verschieben kann, diesen jedoch nicht verlassen kann.

Als vorteilhaft hat es sich weiters herausgestellt, dass die wenigstens zwei Verbindungselemente des Möbelbeschlags als Haltebolzen ausgebildet sind, wobei eine Längserstreckung der Haltebolzen quer - vorzugsweise rechtwinklig - zu deren Einschubrichtung in die Befestigungsvorrichtung verläuft. Dadurch, dass die Haltebolzen quer - vorzugsweise rechtwinklig - zu der Einschiebrichtung in die Befestigungsvorrichtung ausgebildet sein können, kann erzielt werden, dass nur eine geringe Einschubtiefe der Haltebolzen in die Befestigungsvorrichtung benötigt wird, was zu einer kompakten Ausführung einer Befestigungsvorrichtung beitragen kann.

Bevorzugt kann weiters vorgesehen sein, dass die Entriegelungsvorrichtung eine von außen her zugängliche Werkzeugaufnahme für ein Werkzeug aufweist, über die die Entriegelungsvorrichtung betätigbar ist. Durch die Ausbildung einer von außen zugänglichen Werkzeugaufnahme kann die Entriegelungsvorrichtung auf einfache Art und Weise betätigt werden.

Gemäß einem möglichen Ausführungsbeispiel kann vorgesehen sein, dass die Befestigungsvorrichtung eine Höhenverstelleinrichtung und/oder eine Seitenverstelleinrichtung für die Frontblende aufweist. Durch die Ausbildung einer Höhenverstelleinrichtung für die Befestigungsvorrichtung kann die Frontblende in ihrer Höhe relativ zur Schublade eingestellt werden, durch die Ausbildung einer Seitenverstelleinrichtung für die Frontblende kann die Frontblende relativ zur Schublade hin seitlich ausgerichtet werden.

Schutz wird auch begehrt für eine Schublade mit wenigstens einer Befestigungsvorrichtung zum lösbaren Befestigen einer Frontblende an der Schublade nach wenigstens einer der beschriebenen Ausführungsformen.

Konkret wird auch Schutz begehrt für ein Möbel mit einer beschriebenen Schublade.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1a: eine perspektivische Vorderansicht eines Möbels mit Schubladen,
- Fig. 1b: eine perspektivische Rückansicht eines Möbels mit Schubladen,
- Fig. 2a: eine perspektivische Ansicht einer Schubladenseitenwand mit einer Befestigungsvorrichtung und einem Möbelbeschlag,
- Fig. 2b: eine perspektivische Seitenansicht einer Schubladenseitenwand mit einem Ausschnitt bei der Befestigungsvorrichtung,
- Fig. 3a: eine perspektivische Seitenansicht einer Befestigungsvorrichtung in dessen Gehäuse,
- Fig. 3b: eine perspektivische Seitenansicht wie in Fig. 3a ohne Gehäuse,
- Fig. 4: eine perspektivische Explosionsdarstellung einer Befestigungsvorrichtung,
- Fig. 5a bis Fig. 5c: Seitenansicht der Befestigungsvorrichtung in verschiedenen Stadien während des Einsetzens und Verschiebens des unteren Verbindungselements in die untere Fangvorrichtung,
- Fig. 6: Seitenansicht der Befestigungsvorrichtung bei verriegeltem unteren Verbindungselement und nicht vollständig eingeschobenem unteren Verbindungselement in der unteren Fangvorrichtung,
- Fig. 7: Seitenansicht der Befestigungsvorrichtung bei selbsttätig eingezogenem unteren Verbindungselement in die untere Fangvorrichtung,
- Fig. 8a: Seitenansicht der Befestigungsvorrichtung bei verriegeltem und eingezogenem unteren Verbindungselement und eingeschobenem oberen Verbindungselement
- Fig. 8b: Seitenansicht der Befestigungsvorrichtung bei verriegeltem und eingezogenem unteren Verbindungselement und verriegeltem oberen Verbindungselement
- Fig. 9a: Seitenansicht der Befestigungsvorrichtung während der Aktivierung der Entriegelung, und
- Fig. 9b bis Fig. 9e: Seitenansichten der Befestigungsvorrichtung bei entriegeltem und ausgeworfenem Möbelbeschlag.

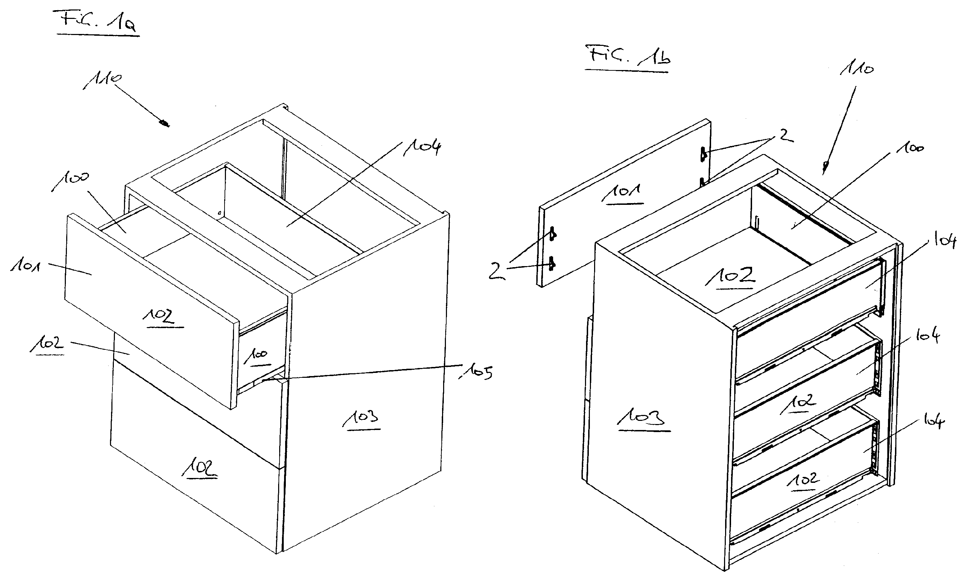

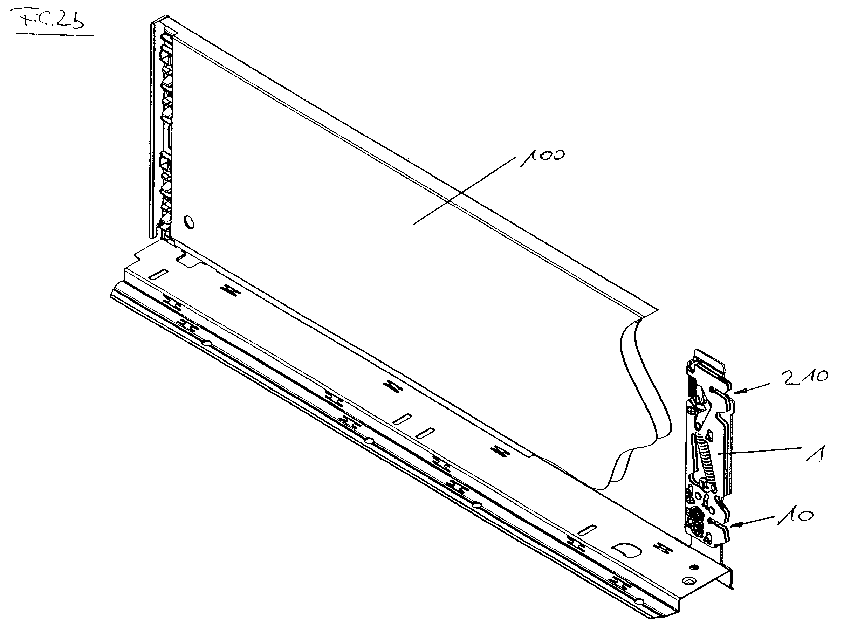

Figur 1 a zeigt eine perspektivische Front-Seitenansicht eines Möbels 110. Dieses Möbel 110 weist drei Schubladen 102 in einem Möbelkorpus 103 auf. Die Schubladen 102 sind auf einer Schubladenausziehführung 105 beweglich im Möbelkorpus 103 gelagert und verfügen jeweils über zwei Schubladenseitenwände 100, eine Frontblende 101 und eine Schubladenrückwand 104. Befestigt ist die Frontblende 101 über die hier nicht dargestellten Befestigungsvorrichtungen 1 (siehe Figur 2b) an den beiden Seitenwänden 100 der Schublade 102.

Figur 1b zeigt eine perspektivische Seiten-Rückansicht eines Möbels 110 mit wiederum drei Schubladen 102, wie eben in Figur 1a geschildert. An der obersten Schublade 102 ist die Frontblende 101 noch nicht montiert, aus diesem Grund sind die vier Möbelbeschläge 2 erkennbar, über deren Verbindungselemente eine Verbindung zu den Schubladenseitenwänden 100 hergestellt wird.

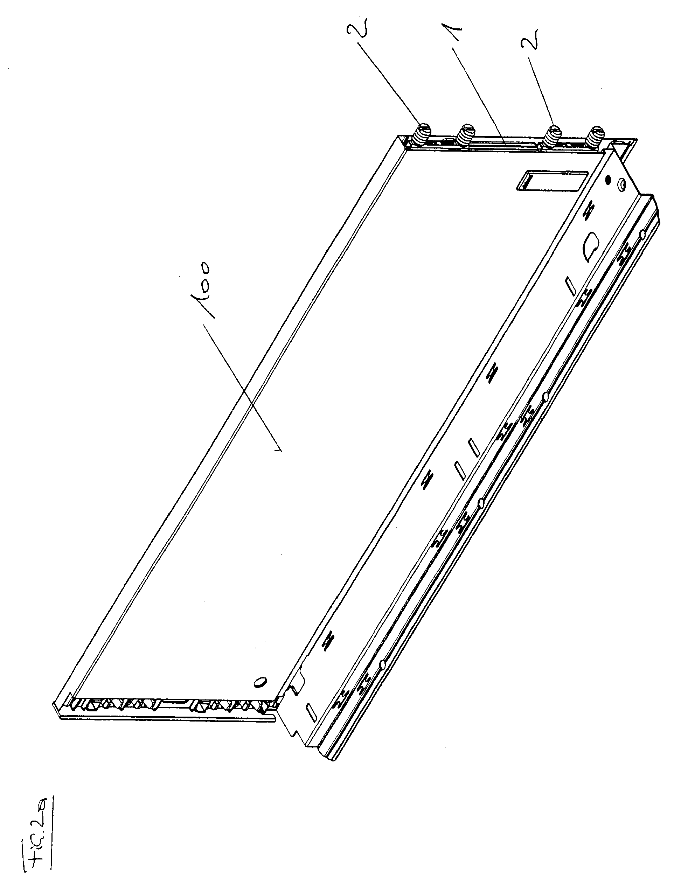

Figur 2a zeigt eine perspektivische Schrägansicht einer rechten Schubladenseitenwand 100 eines hier nicht dargestellten Möbels 110 (siehe Figur 1 a bzw. 1 b). Am vorderen Ende der Schubladenseitenwand 100 ist in diesem bevorzugten Ausführungsbeispiel in der Schubladenseitenwand 100 die Befestigungsvorrichtung 1 für eine hier nicht dargestellte Frontblende 101 angeordnet. Die Möbelbeschläge 2 der hier nicht dargestellten Frontblende 101 sind bereits in der Befestigungsvorrichtung 1 verrastet.

Figur 2b zeigt eine Schubladenseitenwand 100, wie eben in Figur 2a dargestellt. In dieser Darstellung ist kein Möbelbeschlag 2 in der Befestigungsvorrichtung 1 eingebracht. Die Befestigungsvorrichtung 1 ist in diesem Ausführungsbeispiel in der Schubladenseitenwand 100 angeordnet (siehe Figur 2a). In dieser Schnittdarstellung der Figur 2b ist die Befestigungsvorrichtung 1 von der Schubladenseitenwand 100 losgelöst. Bereits hier sind gut die beiden Fangvorrichtungen 10 und 210 erkennbar.

In der weiteren Beschreibung wird die eine Fangvorrichtung 10 als die untere Fangvorrichtung 10 bezeichnet, die zweite Fangvorrichtung 210 wird in der weiteren Figurenbeschreibung als die obere Fangvorrichtung 210 bezeichnet. Dies dient der Einfachheit und Anschaulichkeit und stellt keinerlei Einschränkung auf die Positionen der Fangvorrichtungen in der Befestigungsvorrichtung 1 dar.

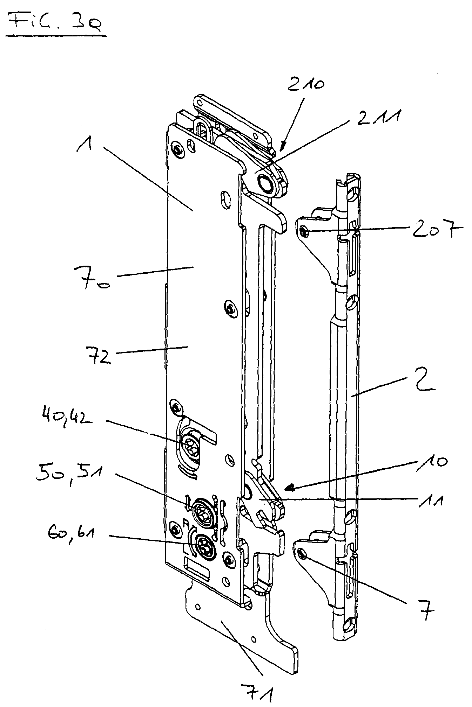

Figur 3a zeigt eine perspektivische Seitenansicht einer Befestigungsvorrichtung 1 und des daran zu befestigenden Möbelbeschlags 2. Die Befestigungsvorrichtung 1 weist ein Gehäuse 70 mit einer rechten Seitenabdeckung 71 und einer linken Seitenabdeckung 72 auf. An der linken Seitenabdeckung 72 sind die Einstellelemente für die Höhenverstelleinrichtung 50 (dessen Höheneinstellschraube 51), für die Seitenverstelleinrichtung 60 (dessen Seiteneinstellschraube 61) und für die Entriegelungsvorrichtung 40 (bzw. dessen Werkzeugaufnahme 42) erkennbar.

Die untere Fangvorrichtung 10 und deren Fangelement 11 als auch die obere Fangvorrichtung 210 und deren Halteelement 211 sind in dieser Darstellung auch erkennbar.

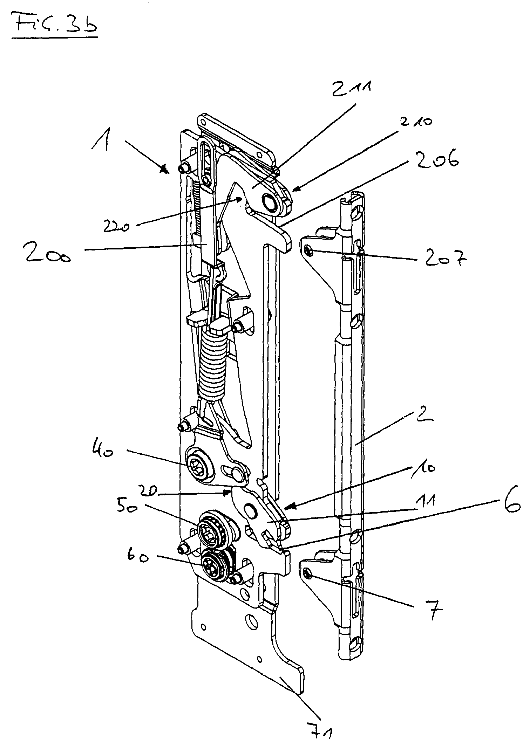

Figur 3b zeigt eine perspektivische Seitenansicht der Befestigungsvorrichtung 1, wie eben in Figur 3a beschrieben, ohne der linken Seitenabdeckung 72.

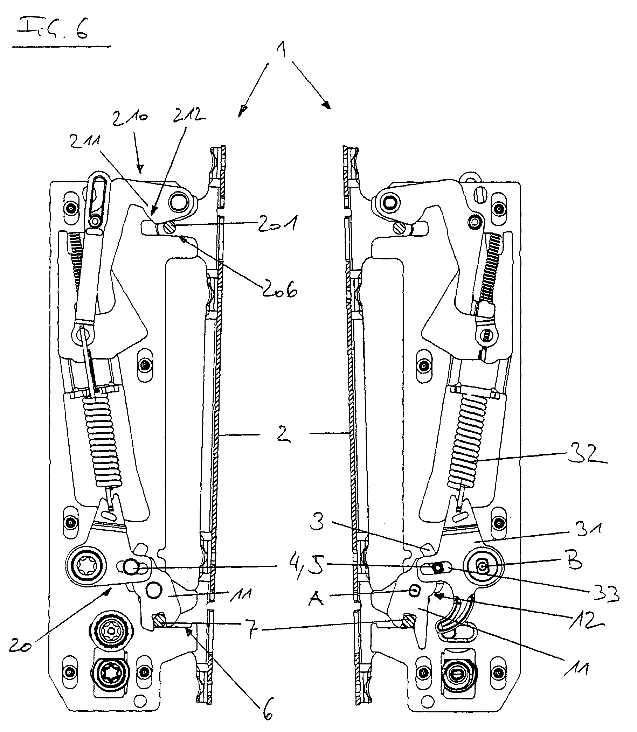

Aus dieser Ansicht ist die untere Fangvorrichtung 10 und dessen Fangelement 11 erkennbar, welches dazu dient, den Möbelbeschlag 2 bzw. dessen Verbindungselement 7 auf der Zuführbahn 6 zu fangen und diesen Möbelbeschlag 2 mit der Befestigungsvorrichtung 1 unten zu verriegeln, für die die Verriegelungsvorrichtung 20 vorgesehen ist (siehe dazu auch Figurenbeschreibung der Figur 6).

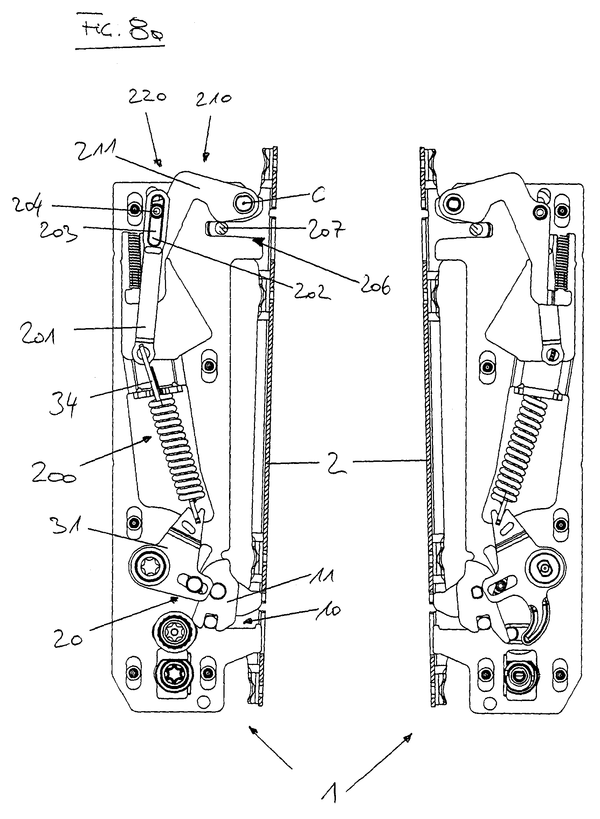

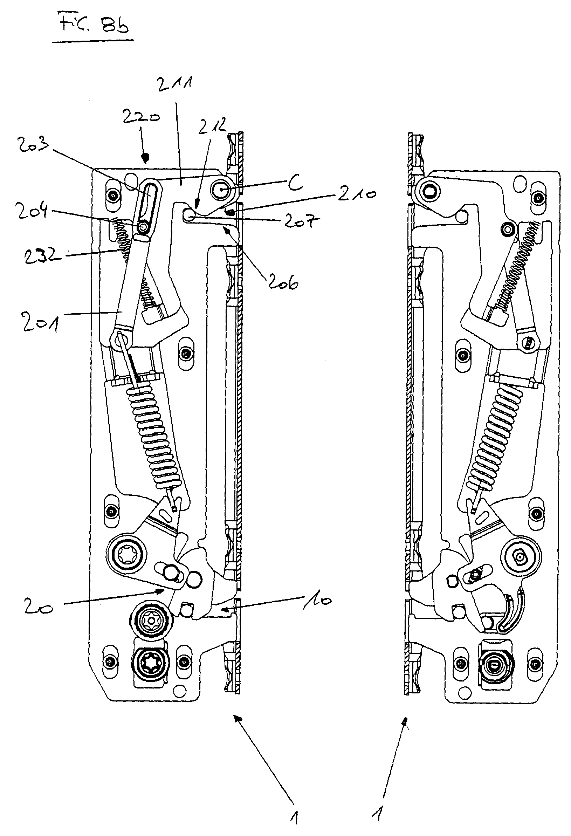

Ebenfalls ist die obere Fangvorrichtung 210 und dessen Halteelement 211 erkennbar, welches dazu dient, den Möbelbeschlag 2 bzw. dessen Verbindungselement 207 auf der Zuführbahn 206 zu fangen und den Möbelbeschlag 2 mit der Befestigungsvorrichtung 1 oben zu verriegeln, für das die Verriegelungsvorrichtung 220 vorgesehen ist (siehe dazu auch Figurenbeschreibung der Figuren 8a und 8b).

Die untere Fangvorrichtung 10 ist über den Übertragungsmechanismus 200 mit der oberen Fangvorrichtung 210 verbunden, wodurch ein gemeinsames Entriegeln der beiden Fangvorrichtungen 10 und 210 erzielt wird.

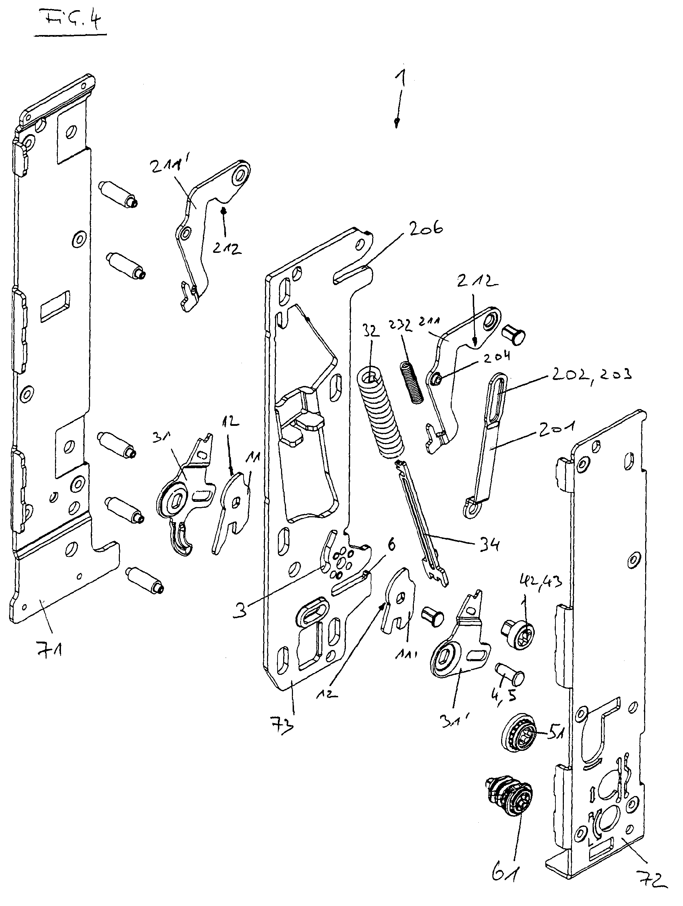

Figur 4 zeigt eine perspektivische Explosionsdarstellung der Befestigungsvorrichtung 1 für den Möbelbeschlag 2 in einer Seiten-Rückansicht. Als Gehäuse für die Befestigungsvorrichtung 1 dienen die rechte Seitenabdeckung 71 und die linke Seitenabdeckung 72. Zwischen diesen beiden Seitenabdeckungen 71 und 72 ist die Grundplatte 73 angeordnet, an der die wesentlichen Bauteile der Befestigungsvorrichtung 1 angeordnet sind. Diese Grundplatte 73 ist durch die Höheneinstellschraube 51 in ihrer Höhe relativ zu der linken und rechten Seitenabdeckung 71 und 72 einstellbar.

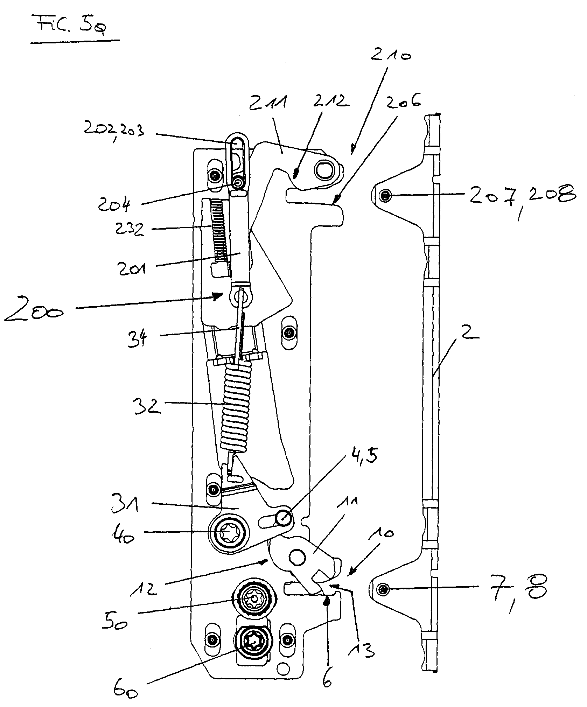

Die Grundplatte 73 weist dabei eine Führungsbahn 3 auf, in der der Stellkörper 4 - welcher in diesem bevorzugten Ausführungsbeispiel als lose Druckrolle 5 ausgebildet ist - verschiebbar gelagert ist. Weiters weist die Grundplatte 73 die Zuführbahn 6 und 206 für die Verbindungselemente 7 und 207 des Möbelbeschlags 2 auf (die Verbindungselemente 7 und 207 des Möbelbeschlags 2 und sind hier nicht dargestellt, sie dazu Figurenbeschreibung der Figur 5a). Entlang dieser Zuführbahnen 6 und 206 werden die Verbindungselemente 7 und 207 des Möbelbeschlags 2 in die Befestigungsvorrichtung 1 eingeführt.

Aus Stabilitätsgründen sind die für die Funktion wesentlichen Bauelemente - das Fangelement 11, das Halteelement 211 und der Schwenkhebel 31 - jeweils doppelt ausgeführt, wobei jeweils einer der Teile links (11, 211', 31) und rechts (11', 211, 31') der Grundplatte 73 ausgebildet ist.

An den beiden Fangelementen 11 und 11' ist in diesem bevorzugten Ausführungsbeispiel die Stellkontur 12 ausgebildet.

Zur Entriegelung wird der Schwenkhebel 31 bzw. 31' über das Entriegelelement 43, welches eine Werkzeugaufnahme 42 aufweist, betätigt.

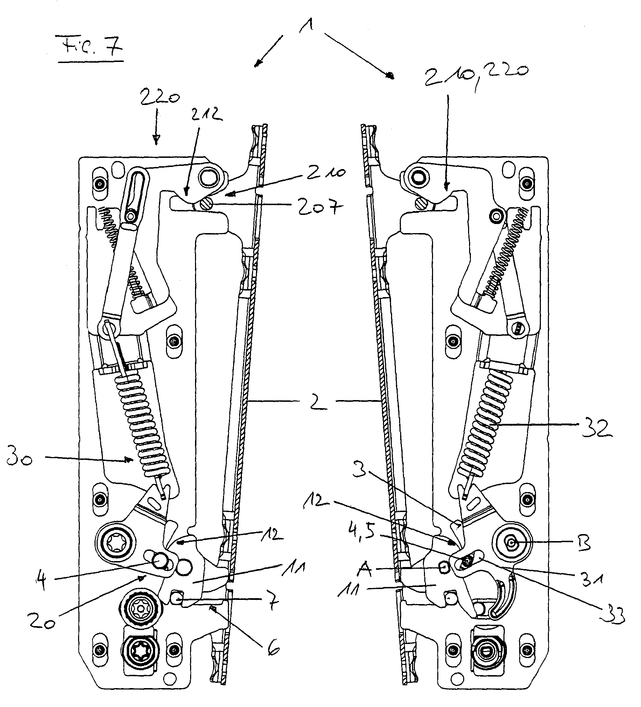

Über die Feder 32 und deren Schubelement 34 werden die beiden Schwenkhebel 31 und 31' federbelastet, was für den Einzugsvorgang des Möbelbeschlages 2 notwendig ist (siehe Figurenbeschreibung der Figur 7).

Über die Seiteneinstellschraube 61 kann die Befestigungsvorrichtung 1 und somit die daran befestigte Frontblende 101 (nicht dargestellt) seitlich verstellt werden.

Das Halteelement 211 bzw. 211' weist jeweils eine Steuerkurve 212 auf, über die das Verriegeln des hier nicht dargestellten Verbindungselementes 207 in der Befestigungsvorrichtung 1 erzielt wird.

Am Halteelement 211 ist weiters das Koppelelement 204 ausgebildet, welches mit der Bahn 202 des Übertragungshebels 201 korrespondiert.

Die beiden Halteelemente 211 und 211' sind über die Feder 232 federbeaufschlagt.

Die Bahn 202 des Übertragungshebels 201 ist in diesem bevorzugten Ausführungsbeispiel als Führungsnut 203 - genau genommen als Langloch - ausgebildet.

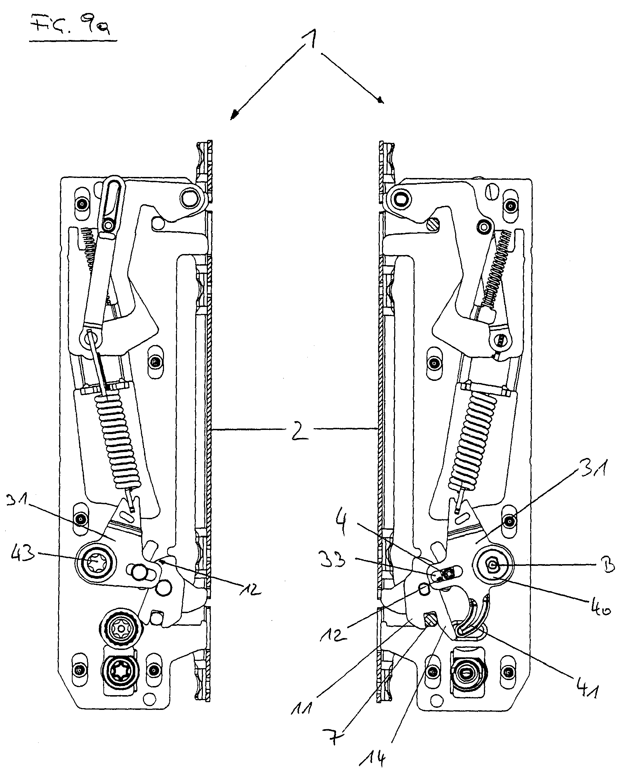

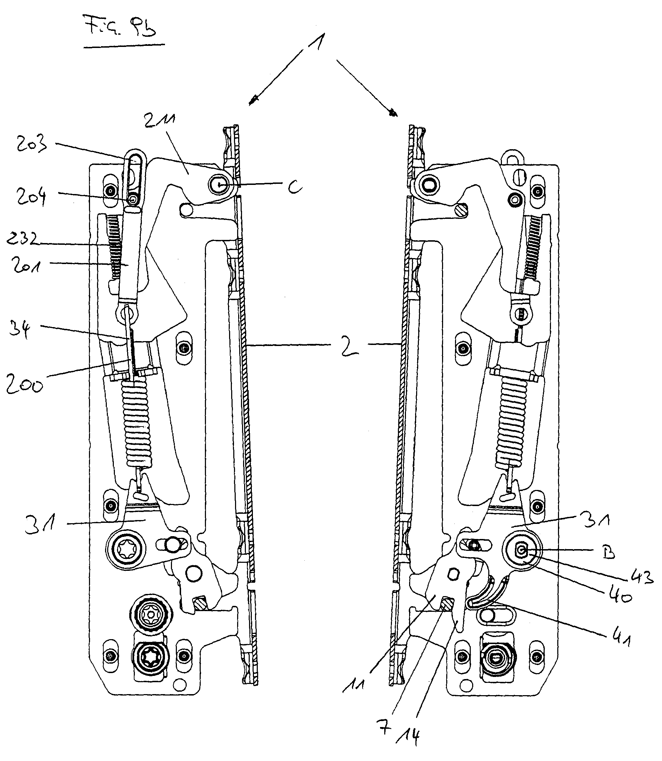

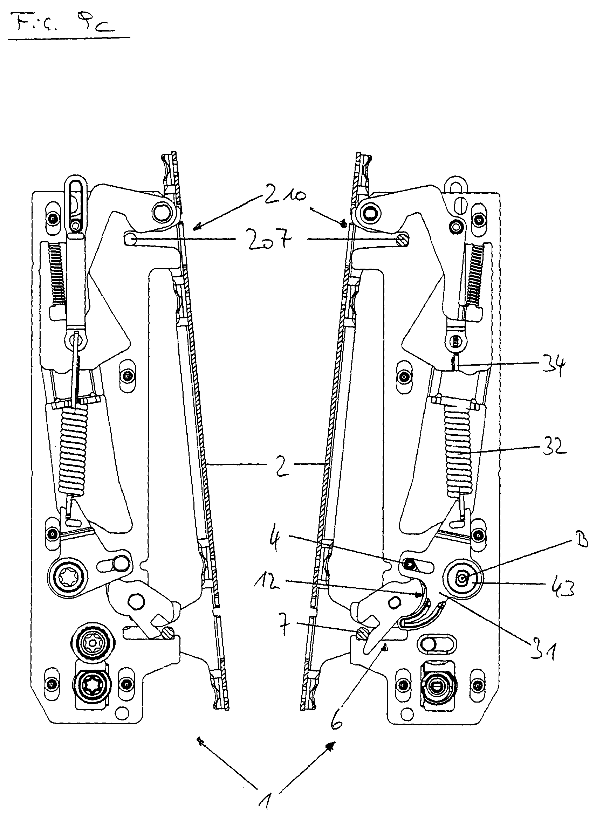

In den Figuren 5a bis 9e ist jeweils ein Schnitt durch die Seitenansicht einer Befestigungsvorrichtung 1 und eines Möbelbeschlags 2 in verschiedenen Situationen dargestellt. Diese Situationen sind:
- das Einführen des Möbelbeschlags 2 in die Befestigungsvorrichtung 1 (Figur 5a bis 5c),
- das Verriegeln des unteren Verbindungselementes 7 des Möbelbeschlags 2 in der unteren Fangvorrichtung 10 der Befestigungsvorrichtung 1 (Figur 6),
- das Einziehen des Möbelbeschlags 2 in die untere Fangvorrichtung 10 der Befestigungsvorrichtung 1 (Figur 7),
- das Einschieben des oberen Verbindungselementes 207 des Möbelbeschlags 2 in die obere Fangvorrichtung 210 der Befestigungsvorrichtung 1 (Figur 8a)
- das Verriegeln des oberen Verbindungselementes 207 des Möbelbeschlags 2 in der oberen Fangvorrichtung 210 der Befestigungsvorrichtung 1 (Figur 8b),
- das gemeinsame Entriegeln der beiden Fangvorrichtungen 10 und 210 des Möbelbeschlags 2 in der Befestigungsvorrichtung 1 (Figur 9a und 9b) und
- das Ausstoßen des Möbelbeschlags 2 aus der Befestigungsvorrichtung 1 (Figur 9c bis 9e).

In den einzelnen Figurendarstellungen 5a bis 9e sind aus Übersichtsgründen nicht immer alle Bauteile der Befestigungsvorrichtung 1 mit Bezugszeichen versehen. Die für den jeweiligen Schritt maßgeblichen Bauteile und deren Bezugszeichen sind jedoch angegeben.

Weiters zeigen die Figurendarstellungen 5b bis 9d jeweils eine linke und eine rechte Seitenansicht der Befestigungsvorrichtung 1 bzw. des Möbelbeschlags 2, die Bezugszeichen sind nicht immer doppelt angegeben, sondern nur dort, wo dies für sinnvoll erachtet wurde.

Da in den folgenden Figurenbeschreibungen Drehungen wie "im Uhrzeigersinn" und "gegen den Uhrzeigersinn" angegeben werden, beziehen sich die folgenden Angaben immer - was die Drehrichtung betrifft - auf die rechte Darstellung bei den Figuren. Sinngemäß kann natürlich alles Beschriebene auf die linken Figuren übertragen werden - durch einfache Umkehr der angegebenen Drehrichtung.

Figur 5a zeigt den Möbelbeschlag 2 und dessen Verbindungselemente 7 und 207 wie diese noch nicht mit der Befestigungsvorrichtung 1 verbunden sind.

Das Fangelement 11 der unteren Fangvorrichtung 10 "wartet" mit seiner Aufnahme 13 an der Zuführbahn 6 auf das Verbindungselement 7 des Möbelbeschlags 2. Der Stellkörper 4 bzw. die Druckrolle 5 liegt nicht bzw. noch nicht an der Stellkontur 12 des Fangelementes 11 an.

In diesem bevorzugten Ausführungsbeispiel weist der Möbelbeschlag 2 beide Verbindungselemente 7 und 207 auf. Ebenso ist es natürlich vorstellbar, dass zwei Möbelbeschläge 2 vorgesehen sind, wobei jeweils jeder Möbelbeschlag 2 ein Verbindungselement 7 und der andere Möbelbeschlag 2 das Verbindungselement 207 aufweist und somit die beiden Möbelbeschläge 2 gesondert mit der Befestigungsvorrichtung 1 befestigt werden könnten.

Ebenfalls "wartet" das Halteelement 211 der zweiten, oberen Fangvorrichtung 210 an der Zuführbahn 206 auf das Verbindungselement 207 des Möbelbeschlags 2.

Die beiden Verbindungselemente 7 und 207 des Möbelbeschlags 2 sind in diesem bevorzugten Ausführungsbeispiel als Haltebolzen 8 bzw. 208 ausgebildet, wobei die Längserstreckung der beiden Haltebolzen 8 und 208 quer - vorzugsweise rechtwinklig - zu deren Einschubrichtung in die Befestigungsvorrichtung 1 verläuft.

Die beiden Fangvorrichtungen 10 und 210 sind über den Übertragungsmechanismus 200 miteinander gekoppelt. Diese Koppelung wirkt sich jedoch nur beim Entriegelungsvorgang aus, nicht jedoch beim Verriegelungsvorgang, wie in den folgenden Darstellungen genauer erläutert werden wird. Der Übertragungsmechanismus 200 besteht im Wesentlichen aus dem Übertragungshebel 201, welcher einerseits über seine Führungsnut 203 mit dem Koppelelement 204 des beweglichen Halteelements 211 korrespondiert und andererseits ist der Übertragungshebel 201 mit dem Schubelement 34 gelenkig verbunden. Das Schubelement 34 wiederum ist über den Schwenkhebel 31 mit der Fangvorrichtung 10 gekoppelt.

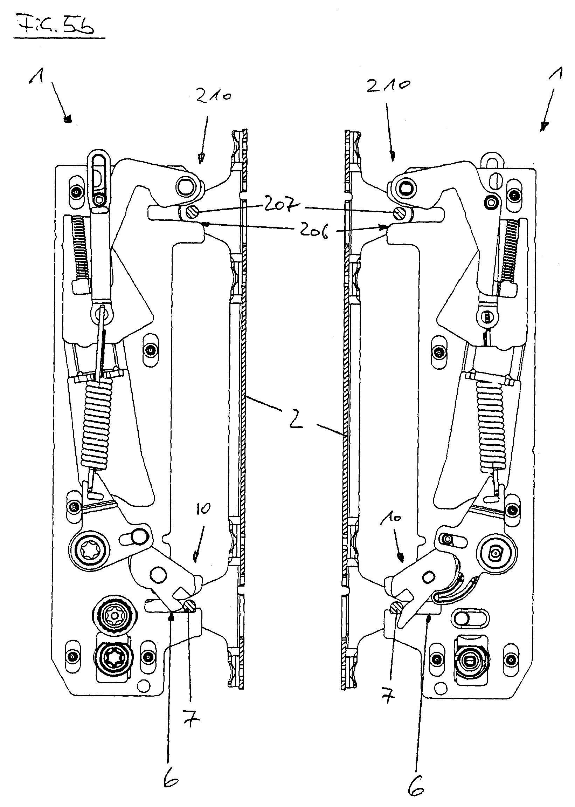

Figur 5b schildert die gleiche Situation wie in der Figur 5a, nur wurde jetzt bereits das Verbindungselement 7 des Möbelbeschlags 2 in die Zuführbahn 6 eingesetzt, eine Verdrehung des Fangelementes 11 fand noch nicht statt. Aus diesem Grund hat sich auch die Druckrolle 5 noch nicht bewegt.

Das obere Verbindungselement 207 wurde ebenfalls bereits in die Zuführbahn 206 eingesetzt. Weder das untere Verbindungselement 7 noch das obere Verbindungselement 207 sind in dieser Situation mit der unteren Fangvorrichtung 10 bzw. der oberen Fangvorrichtung 210 verriegelt.

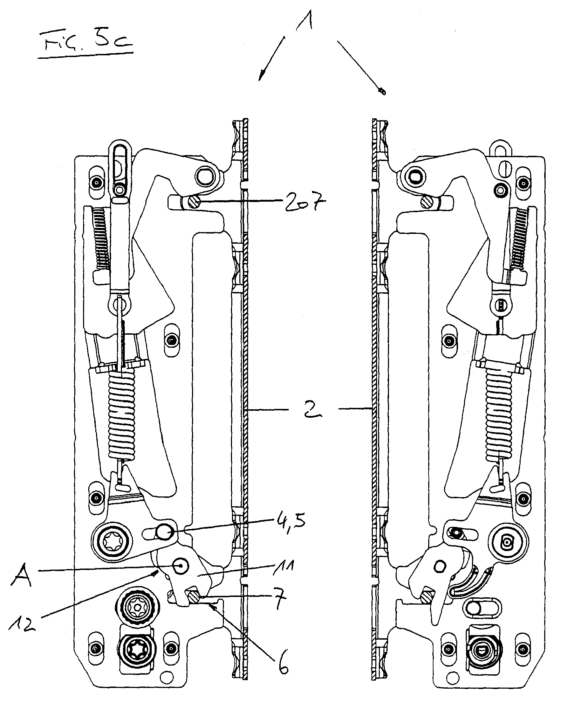

Figur 5c zeigt die Befestigungsvorrichtung 1, in die der Möbelbeschlag 2 bzw. dessen Verbindungselement 7 bereits eingeschoben wurde. Dieses Einschieben fand entlang der Zuführbahn 6 statt. Dabei ist das Verbindungselement 7 des Möbelbeschlags 2 in die Aufnahme des Fangelementes 11 eingedrungen. Das Fangelement 11 ist dabei um seine Drehachse A verschwenkbar gelagert, das Einschieben des Verbindungselementes 7 führte somit zu einer Verdrehung des Fangelements 11 um die Drehachse A. Am Fangelement 11 ist in diesem bevorzugten Ausführungsbeispiel die Stellkontur 12 ausgebildet oder angebracht.

Der Stellkörper 4, welcher in diesem bevorzugten Ausführungsbeispiel als Druckrolle 5 ausgebildet ist, liegt in diesem Moment bereits an der Stellkontur 12 an.

Die Situation des oberen Verbindungselementes 207 des Möbelbeschlags 2 ist unverändert zu der Situation wie in Figur 5b geschildert.

Eine Verriegelung des Fangelementes 11 und somit des Möbelbeschlags 2 bzw. seines Verbindungselementes 7 findet erst in einer Situation wie in der Figur 6 dargestellt statt. Der Möbelbeschlag 2 bzw. dessen Verbindungselement 7 wurde nun so weit in der Zuführbahn 6 in die Befestigungsvorrichtung 1 eingeschoben, dass die Verriegelungsvorrichtung 20 aktiviert wurde. Dies wurde durch eine Verklemmung der Druckrolle 5 zusammen mit der Stellkontur 12 erreicht. Würde man versuchen, den Möbelbeschlag 2 aus der Befestigungsvorrichtung 1 herauszuziehen und somit das Fangelement 11 im Uhrzeigersinn um die Drehachse A zu verschwenken, so würde eine Verklemmung der Druckrolle 5 in der Führungsbahn 3 durch die Stellkontur 12 erfolgen. Ein Herausziehen des Möbelbeschlags 2 ist somit verhindert.

Andererseits ist es sehr wohl noch möglich, das Fangelement 11 gegen den Uhrzeigersinn um die Drehachse A zu bewegen, was zu einem weiteren Absinken des Stellkörpers 4 in der vorzugsweise gekrümmten Führungsbahn 3 führen würde.

Diesbezüglich sei angemerkt, dass für die Verriegelungsvorrichtung 20 der Schwenkhebel 31 und dessen Führung 33 nicht notwendig sind. Die Verriegelung des Fangelementes 11 erfolgt einzig und allein durch die Stellkontur 12, die Führungsbahn 3 und den Stellkörper 4. Dies ist dadurch möglich, dass der Stellkörper 4 allein aufgrund der Gravitation der Führungsbahn 3 bzw. der Stellkontur 12 folgen würde.

Hier wird nun auch ein großer Vorteil dieser Verriegelungsvorrichtung 20 erkennbar. Die Verriegelung des Möbelbeschlags 2 erfolgt nämlich auf der Führungsbahn 6 an beliebigen Stellen in Einschubrichtung, d.h. dass unabhängig von der Einschubtiefe des Möbelbeschlags 2 in die Befestigungsvorrichtung 1 eine Verriegelung erfolgt. Selbst nach erfolgter Verriegelung ist ein weiteres Einschieben des Möbelbeschlags 2 in die Befestigungsvorrichtung 1 möglich, d.h. die Verriegelung erfolgt nur in Ausziehrichtung, nicht jedoch in Einschubrichtung. Somit sind also verschiedene Einschubtiefen erzielbar, wodurch auch Toleranzen in der Herstellung bezüglich des Möbelbeschlages 2 bzw. der Schubladenseitenwand 100 (nicht dargestellt) korrigiert werden können.

Somit fand bei der unteren Fangvorrichtung 10 bereits eine Verriegelung statt, nicht hingegen bei der oberen Fangvorrichtung 210, bei der das Verbindungselement 207 des Möbelbeschlags 2 noch nicht auf der Zuführbahn 206 weiter eingeschoben wurde sondern dieses Verbindungselement 207 "wartet" immer noch an der Steuerkurve 212 des Halteelementes 211 darauf, dass es mit der oberen Fangvorrichtung 210 verriegelt wird.

Somit kommt es also zu einer zeitversetzten Verriegelung der beiden Verbindungselemente 7 und 207 des Möbelbeschlags 2 in der Befestigungsvorrichtung 1.

In diesem bevorzugten Ausführungsbeispiel ist der Stellkörper 4 als lose Druckrolle 5 sowohl einstückig als auch im Wesentlichen bolzenförmig und aus Stahl ausgebildet.

Die Führungsbahn 3 weist zumindest teilweise einen gekrümmten Verlauf mit einem sich - vorzugsweise kontinuierlich - verengenden Radius auf.

In der Figur 7 ist nun dargestellt, wie die Einzugsvorrichtung 30 tätig wird. Nach Einschieben des Möbelbeschlags 2 bzw. dem Verbindungselement 7 in die Fangvorrichtung 10 bzw. dessen Fangelement 11 und dem Verschieben auf der Zuführbahn 6 kommt es in dem in der Figur 6 dargestellten Moment dazu, dass die Feder 32 sich nicht mehr in Totpunktstellung mit der Drehachse B des Schwenkhebels 31 befindet und somit diesen Schwenkhebel 31 - wie in Figur 7 dargestellt - gegen den Uhrzeigersinn um die Drehachse B verschwenkt.

Dies führt dazu, dass die Druckrolle 5 bzw. der Stellkörper 4 in der Führung 33 - welche als Langloch ausgebildet ist - des Schwenkhebels 31 nach unten - entlang der Führungsbahn 3 - gedrückt wird. Dieser Druck nach unten führt dazu, dass sich der Stellkörper 4 in seiner Führungsbahn 3 federbelastet nach unten bewegt und dabei - aufgrund der Ausbildung der Stellkontur 12 am Fangelement 11 - das Fangelement 11 um seine Drehachse A ebenfalls gegen den Uhrzeigersinn verschwenkt. Dadurch wird der Möbelbeschlag 2 durch diesen Rollen-Steuerkontur-Antrieb weiter in die Befestigungsvorrichtung 1 hineingezogen.

Auch in dieser Stellung ist die untere Verriegelungsvorrichtung 20 wieder bzw. immer noch aktiv, da der Stellkörper 4 immer noch an der Stellkontur 12 anliegt und sich mit dieser verklemmen würde, sollte versucht werden, das Fangelement 11 im Uhrzeigersinn zu verschwenken.

An der oberen Verriegelungsvorrichtung 220 bzw. der oberen Fangvorrichtung 210 "wartet" immer noch das Verbindungselement 207 an der Steuerkurve 212 des Halteelementes 211 darauf, in die obere Fangvorrichtung 210 eingebracht zu werden.

In den Figuren 8a und 8b wird nun das Verriegeln der oberen Verriegelungsvorrichtung 220 geschildert. Die untere Verriegelungsvorrichtung 20 und die untere Fangvorrichtung 10 als auch der Schwenkhebel 31 haben keinerlei Einfluss auf den Verriegelungsvorgang des oberen Verbindungselementes 207 mit der Fangvorrichtung 210.

Das Verbindungselement 207 des Möbelbeschlags 2 wird auf der Zuführbahn 206 in die Befestigungsvorrichtung 1 eingeschoben. Das Verbindungselement 207 hebt dabei das Halteelement 211 über die Steuerkurve 212 an und verschwenkt dabei das Halteelement 211 um dessen Drehachse C (Figur 8a), wodurch das Verbindungselement 207 hinter die Steuerkurve 212 des Halteelements 211 gelangen kann (siehe Figur 8b) und an der Steuerkurve 212 verriegelt anliegt.

Das Anheben des Halteelementes 211 wurde dadurch ermöglicht, dass in dem Übertragungshebel 201 eine Führungsnut 203 ausgebildet ist, in der ein Koppelelement 204 des Halteelements 211 verschiebbar gelagert ist. Ohne diese als Langloch ausgebildete Führungsnut 203 könnte das Halteelement 211 nicht angehoben werden, da sonst eine starre Verbindung zwischen dem Halteelement 211 mit dem bereits verriegelten Fangelement 11 über den Übertragungshebel 201, dem Schubelement 34 und den Schwenkhebel 31 bestehen würde. Durch diese Ausgestaltung der Bahn 202 in dem Übertragungshebel 201 der Übertragungsvorrichtung 200 kann sich das Halteelement 211 immer noch bewegen, obwohl die untere Verriegelungsvorrichtung 20 bereits aktiviert ist, die obere Verriegelungsvorrichtung 220 jedoch noch nicht.

In der Figur 8b ist dargestellt, wie die obere Verriegelungsvorrichtung 220 aktiviert wurde, indem das Verbindungselement 207 auf der Zuführbahn 206 bis hinter die Steuerkurve 212, welche als Nase ausgebildet ist, geschoben wurde, wodurch einerseits das Koppelelement 204 das Halteelement 211 wieder in der Führungsnut 203 des Übertragungshebels 201 sich nach unten bewegt hat und andererseits die Verriegelungsvorrichtung 220 über die Feder 232 aktiviert wurde, wodurch das Herausziehen des Verbindungselementes 207 aus der Befestigungsvorrichtung 1 verhindert wird, wodurch ein unbeabsichtigtes Lösen des Möbelbeschlags 2 aus der oberen Fangvorrichtung 210 als auch aus der unteren Fangvorrichtung 10 verhindert wird.

Somit sind nun beide Verriegelungsvorrichtungen 20 und 220 aktiv.

Um die Befestigungsvorrichtung 1 wieder zu entriegeln, ist die Entriegelungsvorrichtung 40 vorgesehen, deren Funktion nun anhand der Figur 9a geschildert wird. Über das Entriegelelement 43 - welches am Schwenkhebel 31 ausgebildet ist - kann die Entriegelung händisch vorgenommen werden.

Ein Verdrehen des Schwenkhebels 31 im Uhrzeigersinn um die Drehachse B bewirkt, dass der Stellkörper 4 in der Führung 33 von der Stellkontur 12 und somit vom Fangelement 11 abgehoben wird, wodurch das Fangelement 11 nicht mehr blockiert ist.

Um das Ausstoßen bedienerfreundlicher zu gestalten, ist ein Ausstoßer 41 am Schwenkhebel 31 ausgebildet, der - wie bereits in dieser Darstellung ersichtlich ist - auf den Entriegelhebel 14 des Fangelementes 11 drückt und somit ein Verdrehen des Schwenkhebels 31 im Uhrzeigersinn zu einem Verdrehen des Fangelementes 11 im Uhrzeigersinn führt, wodurch das Verbindungselement 7 des Möbelbeschlags 2 aus der Befestigungsvorrichtung 1 ausgeschoben wird, wie dies in der Figur 9b dargestellt ist.

Durch das Verdrehen des Schwenkhebels 31 wurde über den Übertragungsmechanismus 200 (Schwenkhebel 31 - Schubelement 34 - Übertragungshebel 201 - Koppelelement 204 - Halteelement 211) das Koppelelement 204 in der Führungsnut 203 des Übertragungshebels 201 angehoben und um die Drehachse C des Halteelements 211 verschwenkt. Durch das Anheben des Koppelelements 204 wird in weiterer Folge das Halteelement 211 angehoben, wodurch die Zuführbahn 206 freigegeben wird und das Verbindungselement 207 somit aus der Befestigungsvorrichtung 1 entnommen werden kann. Gleichzeitig wurde durch das Drehen des Schwenkhebels 31 über den Übertragungsmechanismus 200 die Feder 232 wieder gespannt.

Dreht der Bediener weiter im Uhrzeigersinn am Entriegelelement 43, so kommt es - wie in Figur 9c dargestellt - zu einem vollkommenen Ausstoßen des unteren Verbindungselementes 7 des Möbelbeschlags 2 auf der Zuführbahn 6.

In dieser Position kann der Bediener das Entriegelelement 43 wieder auslassen, da die Feder 32 mit ihrem Schubelement 34 sich in einer Totpunktlage gegenüber der Drehachse B des Schwenkhebels 31 befindet und somit der Stellkörper 4 und die Stellkontur 12 nicht mehr federbelastet aneinander liegen.

Auch das obere Verbindungselement 207 des Möbelbeschlags 2 könnte aus der oberen Fangvorrichtung 210 entnommen werden.

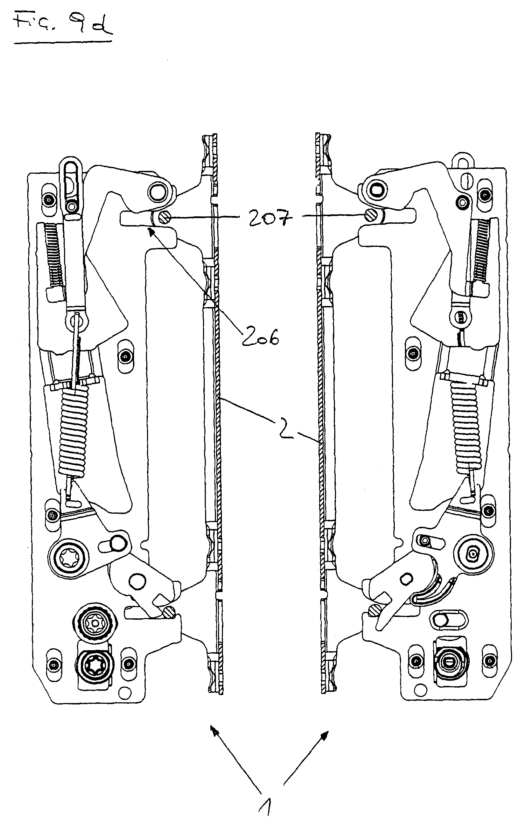

In Figur 9d ist dargestellt, wie auch das obere Verbindungselement 207 des Möbelbeschlags 2 bereits aus der Zuführbahn 206 herausbewegt wurde.

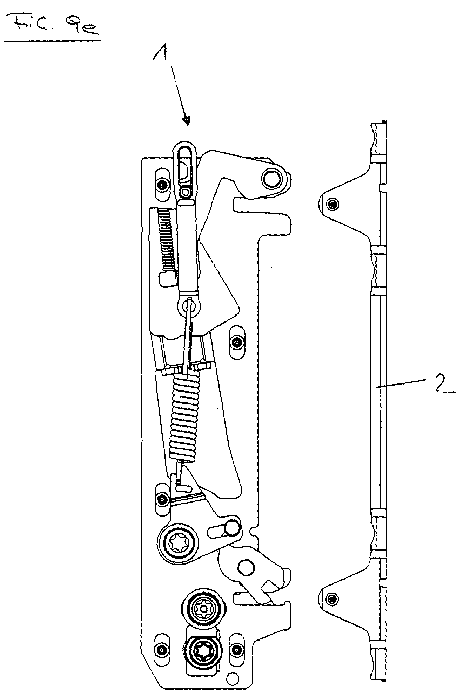

Somit kann der Möbelbeschlag 2 - wie in Figur 9e dargestellt - aus der Befestigungsvorrichtung 1 entfernt werden.

### Bezugszeichenliste:

- 1: Befestigungsvorrichtung
- 2: Möbelbeschlag
- 3: Führungsbahn
- 4: Stellkörper
- 5: Druckrolle
- 6: Untere Zuführbahn
- 7: Unteres Verbindungselement
- 8: Unterer Haltebolzen
- 10: Untere Fangvorrichtung
- 11: Fangelement
- 12: Stellkontur
- 13: Aufnahme
- 14: Entriegelhebel
- 20: Untere Verriegelungsvorrichtung
- 30: Einzugsvorrichtung
- 31: Schwenkhebel
- 32: Feder
- 33: Führung (Langloch)
- 34: Schubelement
- 40: Entriegelungsvorrichtung
- 41: Ausstoßer
- 42: Werkzeugaufnahme
- 43: Entriegelelement
- 50: Höhenverstelleinrichtung
- 51: Höheneinstellschraube
- 60: Seitenverstelleinrichtung
- 61: Seiteneinstellschraube
- 70: Gehäuse
- 71: Rechte Seitenabdeckung
- 72: Linke Seitenabdeckung
- 73: Grundplatte
- 100: Schubladenseitenwand
- 101: Frontblende
- 102: Schublade
- 103: Möbelkorpus
- 104: Schubladenrückwand
- 105: Schubladenausziehführung
- 110: Möbel
- 200: Übertragungsmechanismus
- 201: Übertragungshebel
- 202: Bahn
- 203: Führungsnut (Langloch)
- 204: Koppelelement
- 206: Obere Zuführbahn
- 207: Oberes Verbindungselement
- 208: Oberer Haltebolzen
- 210: Obere Fangvorrichtung
- 211: Halteelement (beweglich)
- 212: Steuerkurve
- 220: Obere Verriegelungsvorrichtung
- A: Drehachse A des Fangelements 11 B Drehachse B des Schwenkhebels 31
- C: Drehachse C des Halteelements 211

## Patentansprüche

1. Befestigungsvorrichtung (1) zum lösbaren Befestigen einer Frontblende (101) an einer Schublade (100), insbesondere an einer Schubladenseitenwand (100), mit:
- wenigstens einem an der Frontblende (101) vormontierten Möbelbeschlag (2) mit einem ersten (7) und einem zweiten Verbindungselement (207) für die Befestigung der Frontblende (101) an der Schublade (102),
- wenigstens zwei der Schublade (102) zugeordneten Fangvorrichtungen (10, 210), wobei die Fangvorrichtungen (10, 210) beim Einschieben der Verbindungselemente (7, 207) diese selbsttätig halten, wobei die eine Fangvorrichtung (10) wenigstens ein bewegliches Fangelement (11) und die zweite Fangvorrichtung (210) wenigstens ein bewegliches Halteelement (211) aufweisen,
- wenigstens einer Verriegelungsvorrichtung (20, 220) für die beiden Fangvorrichtungen (10, 210), die ein unbeabsichtigtes Lösen des Möbelbeschlags (2) aus den Fangvorrichtungen (10, 210) verhindern,
- wenigstens einer Entriegelungsvorrichtung (40) für die beiden Fangvorrichtungen (10, 210), wobei die Entriegelungsvorrichtung (40) ein gemeinsames Lösen der beiden Verbindungselemente (7, 207) des Möbelbeschlags (2) aus den Fangvorrichtungen (10, 210) ermöglicht,
wobei das Haltelement (211) zum Verriegeln des zweiten Verbindungselements (207) in der zweiten Fangvorrichtung (210) unabhängig vom Fangelement (11) der ersten Fangvorrichtung (10) bewegbar ist, **dadurch gekennzeichnet, dass** das Fangelement (11) um eine erste Drehachse (A) verschwenkbar gelagert ist und dass das Halteelement (211) um eine zweite Drehachse (C) verschwenkbar gelagert ist, wobei die beiden Drehachsen gesondert sind und mit Abstand voneinander angeordnet sind.

2. Befestigungsvorrichtung nach Anspruch 1, **dadurch gekennzeichnet, dass** die erste Fangvorrichtung (10) in einem unteren Bereich der Befestigungsvorrichtung (1) ausgebildet ist und dass die zweite Fangvorrichtung (210) in einem oberen Bereich der Befestigungsvorrichtung (1) ausgebildet ist.

3. Befestigungsvorrichtung nach einem der Ansprüche 1 oder 2, **dadurch gekennzeichnet, dass** das Fangelement (11) und das Halteelement (211) unabhängig voneinander jeweils von einer Feder (32, 232) beaufschlagt sind.

4. Befestigungsvorrichtung nach einem der Ansprüche 1 bis 3, **dadurch gekennzeichnet, dass** zum gemeinsamen Entriegeln der beiden Fangvorrichtungen (10, 210) zwischen den beiden Fangvorrichtungen (10, 210) ein Übertragungsmechanismus (200) ausgebildet ist.

5. Befestigungsvorrichtung nach Anspruch 4, **dadurch gekennzeichnet, dass** der Übertragungsmechanismus (200) ein Hebelwerk mit einem Schubelement (34) und einem mit dem Schubelement (34) beweglich gekoppelten Übertragungshebel (201) aufweist.

6. Befestigungsvorrichtung nach Anspruch 5, **dadurch gekennzeichnet, dass** der Übertragungshebel (201) des Hebelwerks eine Bahn (202) aufweist, an der ein Koppelelement (204) des Halteelements (211) beweglich geführt anliegt.

7. Befestigungsvorrichtung nach Anspruch 6, **dadurch gekennzeichnet, dass** die Bahn (202) als Führungsnut (203) - vorzugsweise als Langloch - ausgebildet ist.

8. Befestigungsvorrichtung nach einem der Ansprüche 1 bis 7, **dadurch gekennzeichnet, dass** die wenigstens zwei Verbindungselemente (7, 207) des Möbelbeschlags (2) als Haltebolzen (8, 208) ausgebildet sind, wobei eine Längserstreckung der Haltebolzen (8, 208) quer - vorzugsweise rechtwinklig - zu deren Einschubrichtung in die Befestigungsvorrichtung (1) verläuft.

9. Befestigungsvorrichtung nach einem der Ansprüche 1 bis 8, **dadurch gekennzeichnet, dass** die Entriegelungsvorrichtung (40) eine von außen her zugängliche Werkzeugaufnahme (42) für ein Werkzeug aufweist, über die (42) die Entriegelungsvorrichtung (40) betätigbar ist.

10. Befestigungsvorrichtung nach einem der Ansprüche 1 bis 9, **dadurch gekennzeichnet, dass** die Befestigungsvorrichtung (1) eine Höhenverstelleinrichtung (50) und/oder eine Seitenverstelleinrichtung (60) für die Frontblende (101) aufweist.

11. Schublade (102) mit wenigstens einer Befestigungsvorrichtung (1) zum lösbaren Befestigen einer Frontblende (101) an der Schublade (102) nach einem der Ansprüche 1 bis 10.

12. Möbel (110) mit einer Schublade (102) nach Anspruch 11.

## Claims

1. A fastening device (1) for releasably fastening a front panel (101) to a drawer (100), in particular to a drawer side wall (100), comprising:
- at least one furniture fitting (2) pre-mounted to the front panel (101) and having a first (7) and a second connecting element (207) for fastening the front panel (101) to the drawer (102),
- at least two catching devices (10, 210) associated with the drawer (102), wherein the catching devices (10, 210) automatically hold the connecting elements (7, 207) when being pushed in, wherein the one catching device (10) has at least one moveable catching element (11) and the second catching device (210) has at least one moveable holding element (211),
- at least one locking device (20, 220) for the two catching devices (10, 210) which prevent unintentional release of the furniture fitting (2) from the catching devices (10, 210), and
- at least one unlocking device (40) for the two catching devices (10, 210), wherein the unlocking device (40) permits joint release of the two connecting elements (7, 207) of the furniture fitting (2) from the catching devices (10, 210),
wherein the holding element (211) is moveable for locking the second connecting element (207) in the second catching device (210) independently of the catching element (11) of the first catching device (10),
**characterized in that** the catching element (11) is mounted pivotably about an axis of rotation (A) and the holding element (211) is mounted pivotably about an axis of rotation (C), wherein the two pivot axes are separate and are arranged at a distance from each other.

2. A fastening device as set forth in claim 1 **characterised in that** the first catching device (10) is provided in a lower region of the fastening device (1) and the second catching device (210) is provided in an upper region of the fastening device (1).

3. A fastening device as set forth in one of claims 1 or 2 **characterised in that** the catching element (11) and the holding element (211) are respectively acted upon by a spring (32, 232) independently of each other.

4. A fastening device as set forth in one of claims 1 through 3 **characterised in that** for joint unlocking of the two catching devices (10, 210) a transmission mechanism (200) is provided between the two catching devices (10, 210).

5. A fastening device as set forth in claim 4 **characterised in that** the transmission mechanism (200) has a lever assembly having a thrust element (34) and a transmission lever (201) moveably coupled to the thrust element (34).

6. A fastening device as set forth in claim 5 **characterised in that** the transmission lever (201) of the lever assembly has a path (202) against which a coupling element (204) of the holding element (211) moveably guidedly bears.

7. A fastening device as set forth in claim 6 **characterised in that** the path (202) is in the form of a guide groove (203) - preferably in the form of an elongate hole.

8. A fastening device as set forth in one of claims 1 through 7 **characterised in that** the at least two connecting elements (7, 207) of the furniture fitting (2) are in the form of holding bolts (8, 208), wherein a longitudinal extent of the holding bolts (8, 208) extends transversely - preferably at a right angle - to the direction of insertion thereof into the fastening device (1).

9. A fastening device as set forth in one of claims 1 through 8 **characterised in that** the unlocking device (40) has a tool receiving means (42) for a tool, which tool receiving means is accessible from the exterior and by way of which the unlocking device (40) is actuable.

10. A fastening device as set forth in one of claims 1 through 9 **characterised in that** the fastening device (1) has a height adjusting device (50) and/or a lateral adjusting device (60) for the front panel (101).

11. A drawer (102) having at least one fastening device (1) for releasably fastening a front panel (101) to the drawer (102) as set forth in one of claims 1 through 10.

12. An article of furniture (110) having a drawer (102) as set forth in claim 11.

## Revendications

1. Dispositif de fixation (1) pour fixer de manière amovible un panneau avant (101) à un tiroir (100), en particulier à une paroi latérale de tiroir (100), comprenant :
- au moins une ferrure de meuble (2) montée au préalable au panneau frontal (101), pourvue d'un premier (7) et d'un deuxième élément d'assemblage (207) pour la fixation du panneau avant (101) au tiroir (102),
- au moins deux dispositifs de retenue (10, 210) associés au tiroir (102), dans lequel les dispositifs de retenue (10, 210) maintiennent eux-même les éléments d'assemblage (7, 207) lorsque ces derniers sont montés, dans lequel l'un des dispositifs de retenue (10) présente au moins un élément de retenue (11) mobile et le deuxième dispositif de retenue (210) présente au moins un élément de maintien (211) mobile,
- au moins un dispositif de verrouillage (20, 220) pour les deux dispositifs de retenue (10, 210), qui empêchent un desserrage accidentel de la ferrure de meuble (2) hors des dispositifs de retenue (10, 210),
- au moins un dispositif de déverrouillage (40) pour les deux dispositifs de retenue (10, 210), dans lequel le dispositif de verrouillage (40) permet un desserrage commun des deux éléments d'assemblage (7, 207) de la ferrure de meuble (2) hors des dispositifs de retenue (10, 210),
dans lequel l'élément de maintien (211) pour verrouiller le deuxième élément d'assemblage (207) dans le deuxième dispositif de retenue (210) peut être déplacé indépendamment de l'élément de retenue (11) du premier dispositif de retenue (10),
**caractérisé en ce que** l'élément de retenue (11) est monté de manière à pouvoir pivoter autour d'un premier axe de rotation (A), et **en ce que** l'élément de maintien (211) est monté de manière à pouvoir pivoter autour d'un deuxième axe de rotation (C), dans lequel les deux axes de rotation sont séparés et sont disposés à distance l'un de l'autre.

2. Dispositif de fixation selon la revendication 1, **caractérisé en ce que** le premier dispositif de retenue (10) est réalisé dans une zone inférieure du dispositif de fixation (1), et **en ce que** le deuxième dispositif de retenue (210) est réalisé dans une zone supérieure du dispositif de fixation (1).

3. Dispositif de fixation selon l'une quelconque des revendications 1 ou 2, **caractérisé en ce que** l'élément de retenue (11) et l'élément de maintien (211) sont soumis indépendamment l'un de l'autre respectivement à l'action d'un ressort (32, 232).

4. Dispositif de fixation selon l'une quelconque des revendications 1 à 3, **caractérisé en ce qu'**un mécanisme de transmission (200) est réalisé afin de déverrouiller conjointement les deux dispositifs de retenue (10, 210) entre les deux dispositifs de retenue (10, 210).

5. Dispositif de fixation selon la revendication 4, **caractérisé en ce que** le mécanisme de transmission (200) présente un mécanisme à levier pourvu d'un élément de poussée (34) et d'un levier de transmission (201) couplé de manière mobile à l'élément de poussée (34).

6. Dispositif de fixation selon la revendication 5, **caractérisé en ce que** le levier de transmission (201) du mécanisme à levier présente une voie (202), au niveau de laquelle un élément de couplage (204) de l'élément de maintien (211) repose en étant guidé de manière mobile.

7. Dispositif de fixation selon la revendication 6, **caractérisé en ce que** la voie (202) est réalisée sous la forme d'une rainure de guidage (203) - de préférence sous la forme d'un trou oblong.

8. Dispositif de fixation selon l'une quelconque des revendications 1 à 7, **caractérisé en ce que** les deux éléments d'assemblage (7, 207) ou plus de la ferrure de meuble (2) sont réalisés sous la forme de boulons de maintien (8, 208), dans lequel une extension longitudinale des boulons de maintien (8, 208) s'étend de manière transversale - de préférence à angle droit -à leur sens de montage dans le dispositif de fixation (1).

9. Dispositif de fixation selon l'une quelconque des revendications 1 à 8, **caractérisé en ce que** le dispositif de déverrouillage (40) présente un logement d'outil (42), accessible depuis l'extérieur, pour un outil, par l'intermédiaire duquel (42) le dispositif de déverrouillage (40) peut être actionné.

10. Dispositif de fixation selon l'une quelconque des revendications 1 à 9, **caractérisé en ce que** le dispositif de fixation (1) présente un système d'ajustement en hauteur (50) et/ou un système d'ajustement latéral (60) pour le panneau avant (101).

11. Tiroir (102) comprenant au moins un dispositif de fixation (1) pour fixer de manière amovible un panneau avant (101) au tiroir (102) selon l'une quelconque des revendications 1 à 10.

12. Meuble (110) comprenant un tiroir (102) selon la revendication 11.
